# EUROPÄISCHE PATENTSCHRIFT

(11) **EP 2 667 269 B1**
(45) Veröffentlichungstag und Bekanntmachung des Hinweises auf die Patenterteilung: **17.12.2014**
(21) Anmeldenummer: 12169553.0
(22) Anmeldetag: 25.05.2012
(51) Int. Cl.: G05B 19/05, G05B 9/03, G06F 17/30

(54) **Verfahren zum Betreiben eines redundanten Automatisierungssystems**
Method for operating a redundant automation system
Procédé de fonctionnement d'un système d'automatisation redondant

(43) Veröffentlichungstag der Anmeldung: 27.11.2013
(73) Patentinhaber: Siemens Aktiengesellschaft, 80333 München (DE)
(72) Erfinder: Grosch, Thomas, 90574 Roßtal (DE); Laforsch, Jürgen, 76187 Karlsruhe (DE); Renschler, Albert, 76275 Ettlingen (DE)

(56) Entgegenhaltungen:
- GB-A- 2 434 229
- US-A1- 2010 049 717

## Beschreibung

Die Erfindung betrifft ein Verfahren zum Betreiben eines mindestens zwei Teilsysteme aufweisenden Automatisierungssystems, die jeweils mit einem Steuerprogramm versehen sind, wobei zum Überführen der Prozesssteuerung von einem Solobetrieb eines der Teilsysteme in einen redundanten Steuerbetrieb mit einem anderen der Teilsysteme relevante Daten des einen Teilsystems dem anderen Teilsystem im Rahmen einer Aufdat-Phase des Automatisierungssystems übertragen werden. Darüber hinaus betrifft die Erfindung ein redundantes Automatisierungssystem, welches zur Durchführung des Verfahrens geeignet ist.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Häufig wird von einem H-System ein stoßfreies "Failover" gefordert, falls eines der Teilsysteme ausfällt und auf das andere Teilsystem umgeschaltet werden muss, wodurch dieses andere Teilsystem in einem so genannten Solobetrieb bzw. nicht-redundanten Betrieb die Prozesssteuerung übernimmt. Dies bedeutet, dass trotz dieser ungeplanten Umschaltung bzw. diesem ungeplanten Wechsel von einem auf das andere Teilsystem diese Umschaltung bzw. dieser Wechsel sich nicht störend auf den zu steuernden technischen Prozess bzw. auf die Prozesssteuerung auswirkt. Dabei ist zulässig, dass an den Ausgängen der angeschlossenen Peripherie eine (kurze) Totzeit auftreten darf, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und sollte daher vermieden werden. Unter stoßfrei ist daher auch die Stetigkeit des Kurvenverlaufs der Prozessausgangswerte zu verstehen.

Um dies zu erreichen, müssen die beiden Teilsysteme zum Zeitpunkt des Ausfalls den gleichen Systemzustand aufweisen. Dies wird durch das geeignete Synchronisationsverfahren sichergestellt. Verarbeiten beide Teilsysteme die Eingangsinformationen (Eingaben) des Prozesses, so befinden sich beide Systeme dann im gleichen Systemzustand, wenn sie - bei gleichen Prozesseingangsdaten bzw. Prozesseingangsinformationen - ihre jeweiligen "thread-globalen" Daten (gemeinsame Daten von Programmen, insbesondere von Programmen unterschiedlicher Prioritäten) in gleicher Weise verändern. Um dies zu erreichen, stellt das Synchronisationsverfahren sicher, dass die einzelnen Threads der beiden Teilsysteme in gleicher Art und Weise unterbrochen bzw. abgearbeitet werden. Damit ergibt sich ein identisches "Threadgebirge".

Darüber hinaus muss auch gewährleistet sein, dass im Rahmen der Überführung der Prozesssteuerung von einem Solo- bzw. nicht-redundanten Betrieb in einen redundanten Betrieb, z. B. nach dem Austausch eines ausgefallenen Teilsystems, diese Überführung bzw. dieser Übergang stoßfrei bewerkstelligt wird. Im Rahmen einer derartigen Überführung ist es erforderlich, relevante Daten von dem bisher prozessführenden Teilsystem auf das neu bzw. zusätzlich angeschlossene bzw. aufgeschaltete Teilsystem zu übertragen. Im Rahmen dieser als Ankoppeln und Aufdaten bezeichneten Überführung während einer so genannten Ankoppeln- und Aufdat-Phase (AuA-Phase) darf der zu steuernde technische Prozess bzw. die Prozesssteuerung nicht störend beeinflusst werden, die Prozesssteuerung muss während dieser AuA-Phase - im Folgenden der Einfachheit halber Aufdat-Phase genannt - störungsfrei weiterlaufen.

Aus der GB 2 434 229 ist ein redundantes Automatisierungssystem bekannt, bei dem die Umschaltung auf das redundante Teilsystem weitgehend stoßfrei erfolgt.

Aus dem Siemens-Katalog ST 70, Kapitel 6, Ausgabe 2011 ist ein redundantes, aus zwei Teilsystemen bestehendes Automatisierungssystem bekannt, welches dazu vorgesehen ist, die Verfügbarkeit einer zu steuernden Anlage zu erhöhen. Ein Aufdaten wird in der Art und Weise bewerkstelligt, dass Daten schrittweise übertragen werden, wobei zunächst geprüft wird, ob sich ein in einem Datenbereich hinterlegter Wert des im Solobetrieb betriebenen Teilsystems von einem neu einzuschreibenden Wert unterscheidet. Falls diese Werte sich unterscheiden, wird ein so genanntes "Dirty-Bit" gesetzt, was darauf hinweist, dass dem weiteren Teilsystem die Daten dieses Datenbereiches zu übertragen sind. Sind alle Daten übertragen, arbeitet das Automatisierungssystem im redundanten Betrieb. Nachteilig ist, dass für den Fall, dass die Daten dieses Datenbereichs hochdynamische Daten repräsentieren, zum Ende der Aufdat-Phase der Übergang nicht stoßfrei erfolgt ("Aufdatstoß"), weil das im Solobetrieb arbeitende Teilsystem angehalten und die Prozesssteuerung kurzzeitig gestoppt werden muss.

Der Erfindung liegt daher die Aufgabe zugrunde, ein Verfahren der eingangs genannten Art anzugeben, mittels welchem ein Aufdaten erleichtert wird. Darüber hinaus ist ein redundantes Automatisierungssystem zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Automatisierungssystems durch die im kennzeichnenden Teil des Anspruchs 3 angegebenen Maßnahmen gelöst.

Vorteilhaft ist, dass auf einen aufwendigen "Dirty-Bit-Mechanismus" verzichtet werden kann. Zu Beginn der Aufdat-Phase erstellt das im Solobetrieb arbeitende Teilsystem - im Folgenden als Master bezeichnet - eine Kopie seiner relevanten Daten, die den internen Zustand des Masters zu Beginn dieser Aufdat-Phase repräsentieren, wobei diese Daten fragmentiert dem "aufzudatenden" bzw. neu aufgeschalteten Teilsystem - im Folgenden als Slave oder Reserve bezeichnet - übertragen werden. Dieser interne Zustand wird im Wesentlichen durch statische und dynamische Daten, Datenbausteine, Prozessein- und - ausgangswerte sowie Konfigurationsdaten bestimmt bzw. vorgegeben. Der Slave wird schließlich über die Freigaben schrittweise und zeitlich asynchron zur aktuellen Verarbeitung des Steuerprogramms durch den Master an den internen Zustand des Masters herangeführt, wobei der Slave mit der Bearbeitung der Freigaben erst dann beginnt, falls dieser die Kopie vollständig erhalten hat. Der Slave durchläuft mit den relevanten Daten nach Maßgabe der Freigaben zeitlich verzögert die gleichen Programmpfade, die der Master bereits durchlaufen hat. Dies bedeutet, dass der Master im Hinblick auf die Programmver- bzw. -bearbeitung dem Slave zeitlich vorausläuft bzw. der Slave dem Master zeitlich nachläuft. Unter einem "Nachlauf" bzw. "Vorauslauf" wird in diesem Zusammenhang die zeitliche Differenz zwischen dem Beginn der Verarbeitung der Verarbeitungsabschnitte durch den Master und dem Beginn der Verarbeitung der entsprechenden Verarbeitungsabschnitte durch den Slave, was dem Zeitpunkt des Auftretens der Freigabe bzw. des Freigabesignals entspricht, verstanden. Ferner wird darauf hingewiesen, dass unter einem Programm sowohl ein Programm als solches, als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungssystems gewöhnlich in Prioritätsklassen eingeteilt sind und gemäß ihrer zugeordneten Priorität bearbeitet bzw. ausgeführt werden.

Zu dem Zeitpunkt, zu dem der Slave den Nachlauf bzw. Rückstand aufgeholt hat oder dieser Nachlauf eine vorgebbare bzw. vorgegebene und als unkritisch angesehene Zeitspanne bzw. ein tolerierbares Maß unterschreitet, ist die Aufdat-Phase abgeschlossen und das Automatisierungssystem arbeitet ab diesem Zeitpunkt in einer redundanten Betriebsart. Im Hinblick auf die Prozesssteuerung ist daher der Master von dem Solobetrieb in einen redundanten Betrieb mit dem Slave bzw. der Reserve überführt, wobei ab diesem Zeitpunkt der Master und der Slave aufgrund eines Ereignisses, beispielsweise in Form eines Prozessalarms, gleiche Programmpfade vorzugsweise zeitlich asynchron durchlaufen.

Im Hinblick auf derart zeitlich asynchrone Durchläufe der Programmpfade wird auf die ältere europäische Patentanmeldung 12166006.2 verwiesen.

Selbstverständlich kann das Automatisierungssystem auch derart ausgebildet sein, dass nach der Aufdat-Phase bzw. nach dem Aufdaten eine zeitlich synchrone Verarbeitung der Programmpfade verwirklicht wird.

Aufgrund der zeitlich asynchronen Kommunikation zwischen dem Master und dem Slave während der Aufdat-Phase ist es möglich, auch langsame Kommunikationsverbindungen zu nutzen. Dies bedeutet, dass auch eine an sich im Hinblick auf die Übertragungsbandbreite oder Antwortzeit schlechte Kommunikationsverbindung oder auch eine Kommunikationsverbindung vorgesehen werden kann, die auch von anderen Kommunikationsteilnehmern genutzt wird und damit nicht exklusiv für den Ankoppeln- und Aufdatvorgang zur Verfügung steht. Auf eine separate Synchronisationsverbindung kann daher verzichtet werden. Ferner können auch große Distanzen zwischen den beiden Teilsystemen überwunden werden, ohne die Systemleistung durch hohe Signallaufzeiten oder hohe Latenzzeiten allzu sehr zu verschlechtern.

In einer Ausgestaltung der Erfindung ist vorgesehen, dass die Prozesseingangswerte zusammen mit den Freigaben dem anderen Teilsystem übermittelt werden. Die für das andere Teilsystem relevanten Informationen werden zunächst zusammengefasst bzw. gesammelt und schließlich dem anderen Teilsystem übermittelt. Dadurch wird der "Verwaltungsaufwand" für beide Teilsysteme verringert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: einen Ablauf einer zeitlich asynchronen Kopplung von zwei Teilsystemen,
- Figur 2: einen Aufdat-Ablauf und
- Figur 3: ein redundantes Automatisierungssystem.

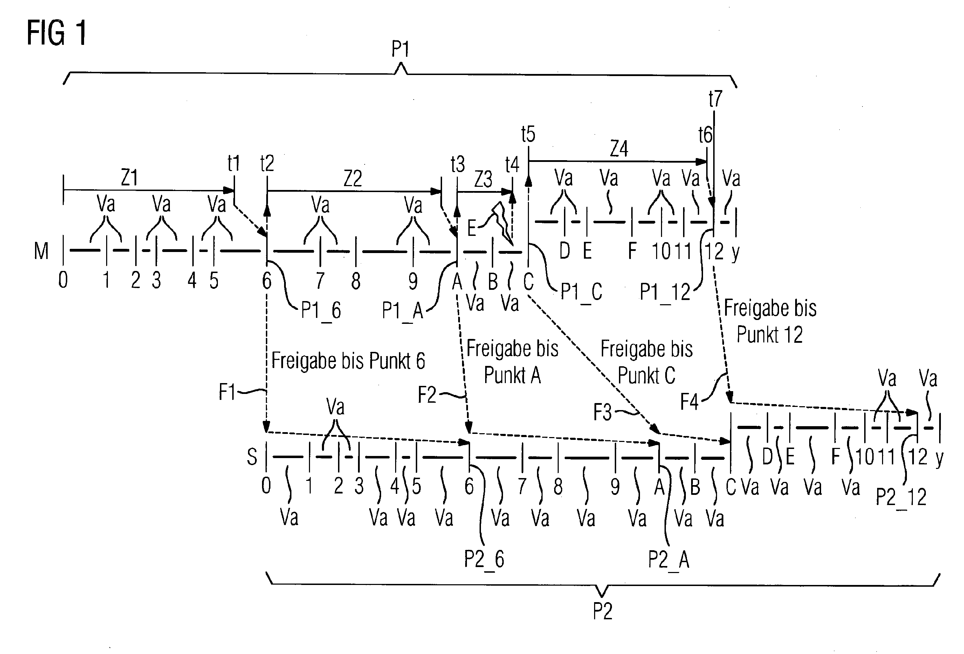

Die in den Figuren 1 bis 3 gleichen Teile sind mit gleichen Bezugszeichen versehen.

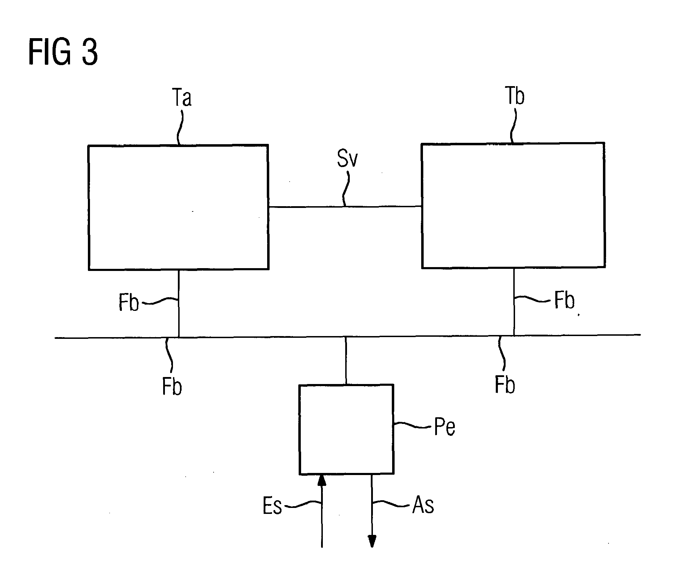

Es wird zunächst auf Figur 3 verwiesen, in welcher ein an sich bekanntes redundantes, zwei Teilsysteme umfassendes Automatisierungssystem dargestellt ist. Ein erstes Teilsystem Ta und ein zweites Teilsystem Tb sind über einen Feldbus Fb mit einer Peripherieeinheit Pe verbunden. Dabei genügt der Feldbus Fb beispielsweise der PROFIBUS-DP-Spezifikation. Prinzipiell sind auch andere Bussysteme, z. B. Ethernet, Fieldbus, Modbus, ProfiNet IO oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme Ta, Tb arbeiten zyklisch und synchron dasselbe Steuerprogramm ab. Zu ihrer Synchronisation ist eine Synchronisationsverbindung Sv vorgesehen, wobei die Redundanz- und Überwachungsfunktionen über diese Synchronisationsverbindung Sv verwirklicht werden.

Wie erläutert, arbeitet ab einem Zeitpunkt, zu welchem eine Aufdat-Phase abgeschlossen ist, das Automatisierungssystem in einer redundanten Betriebsart und im Hinblick auf die Prozesssteuerung ist ein Teilsystem von dem Solobetrieb in den redundanten Betrieb mit einem weiteren Teilsystem überführt. Ab diesem Zeitpunkt durchlaufen beide Teilsysteme ereignissynchron gleiche Programmpfade, z. B. aufgrund eines Ereignisses in Form eines Prozessalarms, wobei der Durchlauf mittels des Masters und der Durchlauf mittels des Slaves vorzugsweise zeitlich asynchron erfolgten.

Zur Erläuterung einer ereignissynchronen Verarbeitung der Steuerprogramme und zum besseren Verständnis der Erfindung wird dazu im Folgenden auf Figur 1 verwiesen, in welcher ein in der älteren europäischen Patentanmeldung 12166006.2 vorgeschlagener Ablauf einer zeitlich asynchronen Kopplung von zwei Teilsystemen dargestellt wird. Eine "ereignissynchrone Verarbeitung" bedeutet in diesem Zusammenhang, dass sowohl der Master als auch der Slave aufgrund eines Ereignisses gleiche Programmpfade des jeweiligen Steuerprogramms durchlaufen, wobei die Durchläufe zeitlich asynchron erfolgen.

Es wird angenommen, dass ein Teilsystem als Master M und ein Teilsystem als Slave S bzw. als Reserve betrieben wird. Der Master M ist daher im Hinblick auf die Steuerung eines technischen Prozesses führend und übernimmt die Prozesssteuerung, wobei der Master die Prozesseingangsinformationen bzw. Prozesseingangswerte von der Peripherieeinheit Pe (Figur 3) liest und zeitlich asynchron dem Slave S bereitstellt. Der Slave S übernimmt nur dann die Masterfunktion bzw. die Masterschaft, falls der Master M aufgrund einer Störung ausfällt.

Der Master M verarbeitet ein Programm P1 zur Steuerung des technischen Prozesses, wobei auch der Slave S ein diesem Steuerprogramm P1 entsprechendes Programm P2 verarbeitet. Beide Steuerprogramme P1, P2 weisen eine Vielzahl von Verarbeitungsabschnitten (Va) unterschiedlicher Zeitdauer auf, wobei die Steuerprogramme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Stellen 0, 1, 2, ... y kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit der Master M und der Slave S Freigaben, Quittungen oder sonstige Informationen über den Feldbus Fb oder über die Synchronisationsverbindung Sv (Figur 4) austauschen können. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervall Zi folgenden Unterbrechungsstelle -, übermittelt der Master M dem Slave S eine Freigabe bzw. ein Freigabesignal, welches dem Slave S anzeigt, bis zu welchem Verarbeitungsabschnitt Va der Slave S das Steuerprogramm P2 verarbeiten darf. Diese Verarbeitungsabschnitte Va des Steuerprogramms P2 entsprechen denen, die der Master M bereits während der Verarbeitung des Steuerprogramms P1 verarbeitet hat. Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, der Master M dem Slave S eine Freigabe F1 übermittelt. Diese Freigabe F1 umfasst die Information für den Slave S, dass dieser sein zu verarbeitendes Steuerprogramm P2 bis zu einer Unterbrechungsstelle P2_6 (Unterbrechungsstelle 6) verarbeiten darf, wobei die Unterbrechungsstelle P2_6 des Steuerprogramms P2 der Unterbrechungsstelle P1_6 des Steuerprogramms P1 entspricht. Dies bedeutet, dass aufgrund der Freigabe der Slave S die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zum Slave S entspricht. Die Verarbeitung dieser Verarbeitungsschritte Va mittels des Slaves S erfolgt also zeitlich asynchron zur Verarbeitung der entsprechenden Verarbeitungsabschnitte Va mittels des Masters M, wobei nach der Verarbeitung der Verarbeitungsabschnitte Va des Steuerprogramms P2 durch den Slave S eine Bearbeitung von weiteren Verarbeitungsabschnitten Va durch den Slave S nur dann erfolgt, wenn der Master M dem Slave S eine weitere Freigabe übermittelt. Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt der Master M dem Slave S eine weitere Freigabe F2, die dem Slave S anzeigt, dass dieser weitere Verarbeitungsabschnitte Va bis zu der Unterbrechungsstelle P2_A bearbeiten kann. Diese Verarbeitungsabschnitte Va entsprechen wiederum denen, welche der Master M bereits vom Zeitpunkt t2 bis zum Zeitpunkt t3, also bis zur Unterbrechungsstelle P1_A, verarbeitet hat. Dies bedeutet, dass der Slave S die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z. B. ein Ereignis in Form eines Prozessalarms, auftritt. Im Ausführungsbeispiel ist mit E ein derartiges Ereignis bezeichnet, auf welches der Master M während des Zeitintervalls Z3 zu einem Zeitpunkt t4 geeignet nach Maßgabe des Steuerprogramms P1 reagieren muss. In diesem Fall übermittelt der Master M dem Slave S eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Slave S übermittelten Freigabe F3 verarbeitet der Slave S die Verarbeitungsabschnitte Va des Steuerprogramms P2, welche den Verarbeitungsabschnitten Va des Steuerprogramms P1 entsprechen, welche der Master M zwischen den Zeitpunkten t3 und t5 bereits verarbeitet hat.

Aufgrund des Ereignisses E verarbeitet der Master M während des Zeitintervalls Z4 Verarbeitungsabschnitte Va höherer Priorität, z. B. vollzieht der Master M einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet der Slave S ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei der Slave S ebenfalls einen Threadwechsel vollzieht.

Wie erläutert, versetzen die Freigaben des Masters M den Slave S in die Lage, das gleiche "Threadgebirge" wie der Master M zu durchlaufen, was bedeutet, dass der Slave S einen "Threadwechsel" an einer Stelle im Steuerprogramm P2 vornimmt, die der Stelle im Steuerprogramm P1 entspricht. Der Slave S setzt seine Bearbeitung nur dann fort, wenn dieser dazu vom Master M durch eine Freigabe aufgefordert wird. Im Hinblick auf die Verarbeitung der Verarbeitungsabschnitte verarbeitet der Master M diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch den Slave S, wobei der Master M weiter sein Steuerprogramm P1 verarbeitet und nicht aktiv auf eine Antwort des Slaves S wartet. Der Slave S läuft bezüglich der Verarbeitung der entsprechenden Verarbeitungsabschnitte dem Master M nach und verarbeitet diese aufgrund der erteilten Master-Freigaben.

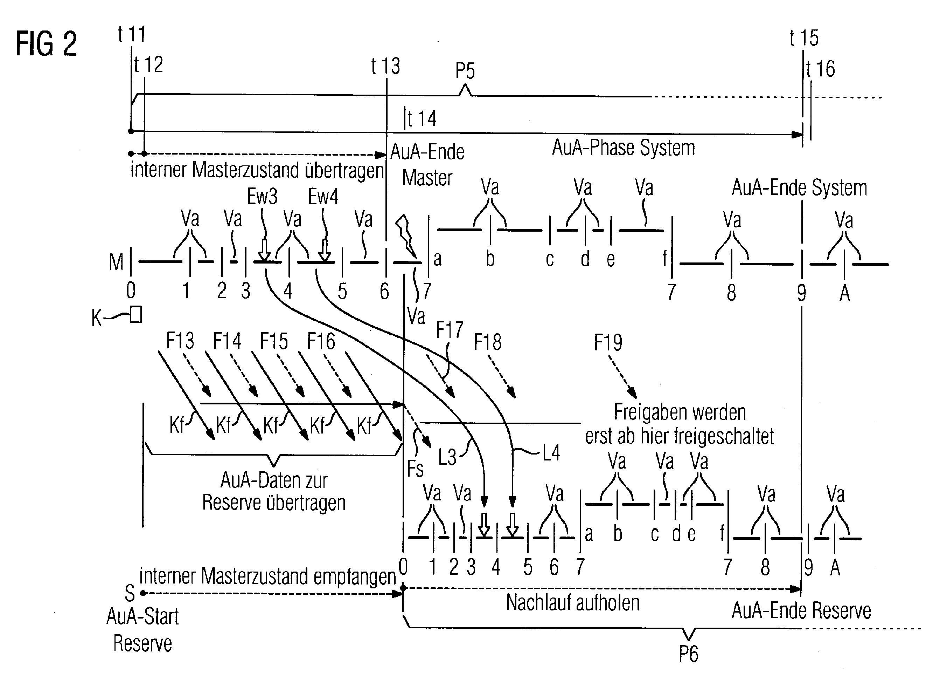

Im Folgenden wird angenommen, dass die Prozesssteuerung von einem Solobetrieb des Masters M in einen redundanten Steuerbetrieb mit dem Slave S überzuführen ist. Eine derartige Überführung ist z. B. dann erforderlich, wenn der Slave S nach einer Reparatur wieder an den Master M angekoppelt wird. Dazu wird auf Figur 2 verwiesen, in welcher ein Aufdat-Ablauf des Automatisierungssystems dargestellt ist.

Diese Überführung beginnt zu einem Zeitpunkt t11, bis zu dem der Master M erkannt hat, dass der Slave S an den Feldbus Fb (Figur 3) angekoppelt ist, wobei ab diesem Zeitpunkt t11 die Aufdat-Phase sowohl des Masters M als auch des Slaves S beginnt. Der Master M erstellt ab diesem Zeitpunkt t11 eine lokale Kopie K aller relevanten Daten, welche seinen internen Zustand bis zu diesem Zeitpunkt t11 repräsentiert, wobei der Master M weiterhin im Solobetrieb den technischen Prozess steuert und Verarbeitungsabschnitte Va eines Steuerprogramms P5 verarbeitet. Ab einem Zeitpunkt t12 bis zu einem Zeitpunkt t13, zu dem die Aufdat-Phase des Masters M abgeschlossen ist, übermittelt der Master M dem Slave S fragmentiert diese Kopie K - was in der Zeichnung mittels Pfeilen Kf angedeutet ist -, die der Slave S bis zu einem Zeitpunkt t14 vollständig empfangen hat. Zu diesem Zeitpunkt t14 weist nun der Slave S den gleichen internen Zustand wie der Master zum Zeitpunkt t11 auf. Ab dem Zeitpunkt t12 werden ferner alle Freigaben des Master M sowie alle vom Master M von der Peripherieeinheit Pe (Figur 3) eingelesenen Prozesseingangswerte auf dem Master M, dem Slave S oder einem weiteren Teilsystem des Automatisierungssystems zwischengespeichert, wobei diese Freigaben für eine Bearbeitung durch den Slave S erst nach dem vollständigen Empfang der Kopie K freigeschaltet werden. Im vorliegenden Ausführungsbeispiel wird angenommen, dass während eines Zeitabschnitts ab dem Zeitpunkt t11 bis zum Zeitpunkt t13, zu welchem die Übertragung der Kopie K abgeschlossen ist, der im Solobetrieb laufende Master M Freigaben F13, F14, F15, F16 erzeugt und ferner Prozesseingangswerte Ew3, Ew4 eingelesen hat. Diese Freigaben F13 bis F16 und diese Prozesseingangswerte Ew3, Ew4 werden dem Slave S erst ab einem Zeitpunkt t14, also zu dem Zeitpunkt, zu welchem der interne Zustand des Masters M vollständig dem Slave S bereitgestellt ist, freigeschaltet, was in der Figur durch einen Pfeil Fs und durch geschwungene Linien L3, L4 angedeutet ist. Nach dieser Freischaltung durch den Master M führt der Slave S sich an den internen Zustand des Master Ms heran, indem der Slave S nach Maßgabe der Freigaben F13 bis F16 die Daten der Kopie K verarbeitet. Dabei verarbeitet der Slave S die Verarbeitungsabschnitte Va seines Steuerprogramms P6, die den Verarbeitungsabschnitten Va des Steuerprogramms P5 des Masters M bis zum Zeitpunkt t13 entsprechen, wobei der Slave S im Hinblick auf die Verarbeitung des Steuerprogramms P6 die Prozesseingangswerte Ew3, Ew4 berücksichtigt.

Aufgrund dessen, dass der Slave S sich zeitlich asynchron an den internen Zustand des Masters M heranführt, läuft im Hinblick auf die Verarbeitung der entsprechenden Verarbeitungsabschnitte Va des Steuerprogramms P6 der Slave S dem Master M nach, wobei dieser zeitliche Nachlauf auf ein tolerierbares Maß verringert werden muss; denn ein zu hoher zeitliche Nachlauf kann zu einem Redundanzverlust führen. Um diesen zeitlichen Nachlauf zu vermindern, ist vorgesehen, dass die Verarbeitungsgeschwindigkeit des Slaves S relativ zur Verarbeitungsgeschwindigkeit des Masters M höher ist, was in der Figur in Form "verkürzt" dargestellter Verarbeitungsabschnitte Va im Steuerprogramm P6 dargestellt ist. Diese relative Erhöhung der Verarbeitungsgeschwindigkeit des Slaves S kann z. B. bewirkt werden, indem der Slave S die Verarbeitungsabschnitte Va seines Programms P6 schneller oder der Master M die Verarbeitungsabschnitte Va seines Programms P5 langsamer verarbeitet. Erst dann, wenn der Nachlauf aufgeholt bzw. auf ein tolerierbares Maß bzw. auf einen vorgegebenen Wert verringert wird, ist die zum Zeitpunkt t12 beginnende Aufdat-Phase des Slaves S und somit des Automatisierungssystems abgeschlossen. Im vorliegenden Ausführungsbeispiel wird angenommen, dass der Nachlauf zu einem Zeitpunkt t15 auf ein tolerierbares Maß verringert wurde. Dieses Maß ist so gewählt bzw. vorgegeben, dass im Falle eines Ausfalls des Masters M der Slave S stoßfrei die Masterschaft übernehmen kann. In der Figur repräsentiert die zeitliche Differenz zwischen einem Zeitpunkt t16 und dem Zeitpunkt t15 das tolerierbare Maß, was in einem praktischen Ausführungsbeispiel der Erfindung ca. 20 Millisekunden beträgt. Im Rahmen der Aufdat-Phase des Slaves S bearbeitet der Slave S ab dem Zeitpunkt t14 bis zum Zeitpunkt t15 sowohl die während der Übertragung der Kopie K zwischengespeicherten Freigaben F13 bis F16 als auch Freigaben F17, F18, F19, welche der Master M dem Slave S nach dieser Übertragung übermittelt. Diese Freigaben F17 bis F19 zeigen dem Slave S an, welche Verarbeitungsabschnitte Va des Steuerprogramms P6 ferner durch den Slave S zu verarbeiten sind, wobei diese Verarbeitungsabschnitte Va den Verarbeitungsabschnitten Va des Steuerprogramms P5 entsprechen, die der Master M bereits ab dem Zeitpunkt t14 verarbeitet hat. Mit anderen Worten: Nachdem der Master M dem Slave S die Kopie vollständig übermittelt hat bzw. der Slave S diese Kopie K vollständig empfangen hat, verarbeitet der Slave S ab dem Zeitpunkt t14 bis zum Zeitpunkt t16 alle freigegebenen Verarbeitungsabschnitte Va seines Steuerprogramms P6, welche denen entsprechen, die der Master M bereits ab dem Zeitpunkt t11 bis zum Zeitpunkt t15 verarbeitet hat.

Ab dem Zeitpunkt t15 ist die Aufdat-Phase abgeschlossen und das Automatisierungssystem in einen redundanten Betrieb überführt. Die Prozesssteuerung ist vom Solobetrieb des Master M ist den redundanten Betrieb mit dem Slave S übergegangen, wobei die weiteren Durchläufe der entsprechenden Programmpfade auf dem Master M und dem Slave S ab dem Zeitpunkt t16 in der beschriebenen Art und Weise zeitlich asynchron oder auch in einer an sich bekannten Art und Weise zeitlich synchron erfolgen kann.

## Patentansprüche

1. Verfahren zum Betreiben eines mindestens zwei Teilsysteme (M, S) aufweisenden Automatisierungssystems, die jeweils mit einem Steuerprogramm (P5, P6) versehen sind, wobei zum Überführen der Prozesssteuerung von einem Solobetrieb eines der Teilsysteme (M) in einen redundanten Steuerbetrieb mit einem anderen der Teilsysteme (S) relevante Daten des einen Teilsystems (M) dem anderen Teilsystem (S) im Rahmen einer Aufdat-Phase des Automatisierungssystems übertragen werden, **dadurch gekennzeichnet, dass**
- zu Beginn der Aufdat-Phase durch das eine Teilsystem (M) eine lokale Kopie (K) seiner relevanten Daten angelegt wird,
- während der Aufdat-Phase dem anderen Teilsystem (S) die Kopie durch das eine Teilsystem (M) fragmentiert übermittelt wird, und Prozesseingangswerte (Ew3, Ew4) sowie Freigaben (F13 bis F16) des einen Teilsystems (M) zwischengespeichert werden, wobei die Freigaben anzeigen, welche Verarbeitungsabschnitte (Va) des Steuerprogramms (P5) das eine Teilsystem (M) bereits verarbeitet hat,
- nach der Übermittlung der Kopie (K) freigegebene Verarbeitungsabschnitte (Va) des Steuerprogramms (P6) des anderen Teilsystems (S), welche den Verarbeitungsabschnitten (Va) des Steuerprogramms (P5) des einen Teilsystems (M) entsprechen, unter Berücksichtigung der zwischengespeicherten Prozesseingangswerte (Ew3, Ew4) mittels des anderen Teilsystems (S) mit einem zeitlichen Nachlauf verarbeitet werden, wobei zur Verringerung des zeitlichen Nachlaufs der Verarbeitung auf einen vorgegeben Wert die Verarbeitungsabschnitte (Va) des Steuerprogramms (P6) relativ zur Verarbeitung der Verarbeitungsabschnitte (Va) des Steuerprogramms (P5) schneller verarbeitet werden.

2. Verfahren nach Anspruch 1, **dadurch gekennzeichnet, dass** die Prozesseingangswerte (Ew3, Ew4) zusammen mit den Freigaben (F13 bis F19) dem anderen Teilsystem (S) übermittelt werden.

3. Redundantes mindestens zwei Teilsysteme (M, S) aufweisendes Automatisierungssystem, die jeweils mit einem Steuerprogramm (P5, P6) versehen sind, wobei zum Überführen der Prozesssteuerung von einem Solobetrieb eines der Teilsysteme (M) in einen redundanten Steuerbetrieb mit einem anderen der Teilsysteme (S) das eine Teilsystem (M) dem anderen Teilsystem (M) relevante Daten im Rahmen einer Aufdat-Phase überträgt, **dadurch gekennzeichnet, dass**
- das eine Teilsystem (M) dazu ausgebildet ist, zu Beginn der Aufdat-Phase eine lokale Kopie (K) seiner relevanten Daten anzulegen,
- das eine Teilsystem (M) ferner dazu ausgebildet ist, während der Aufdat-Phase dem anderen Teilsystem (S) die Kopie (K) fragmentiert zu übermitteln,
- das eine Teilsystem (M), das andere Teilsystem (S) oder ein weiteres Teilsystem des Automatisierungssystems dazu ausgebildet ist, Prozesseingangswerte (Ew3, Ew4) sowie Freigaben (F13 bis F16) des einen Teilsystems (M) zwischenzuspeichern, wobei die Freigaben anzeigen, welche Verarbeitungsabschnitte (Va) des Steuerprogramms (P5) das eine Teilsystem (M) bereits verarbeitet hat,
- das andere Teilsystem (S) ferner dazu ausgebildet ist, nach dem Empfang der Kopie (K) freigegebene Verarbeitungsabschnitte (Va) seines Steuerprogramms (P6), welche den Verarbeitungsabschnitten (Va) des Steuerprogramms (P5) des einen Teilsystems (M) entsprechen, unter Berücksichtigung der zwischengespeicherten Prozesseingangswerte (Ew3, Ew4) mit einem zeitlichen Nachlauf zu verarbeiten, wobei das Automatisierungssystem dazu ausgebildet ist, zur Verringerung des zeitlichen Nachlaufs der Verarbeitung auf einen vorgegeben Wert die Verarbeitungsabschnitte (Va) des Steuerprogramms (P6) relativ zur Verarbeitung der Verarbeitungsabschnitte (Va) des Steuerprogramms (P5) schneller zu verarbeiten.

4. Redundantes Automatisierungssystem nach Anspruch 3, **dadurch gekennzeichnet, dass** das eine Teilsystem (M) dazu ausgebildet ist, die Prozesseingangswerte (Ew1, Ew2) zusammen mit den Freigaben (F13 bis F19) dem anderen Teilsystem zu übermitteln.

## Claims

1. Method for operating an automation system having at least two subsystems (M, S) which are each provided with a control program (P5, P6), relevant data from the one subsystem (M) being transmitted to the other subsystem (S) within the scope of an updating phase of the automation system in order to transfer the process control from a solo mode of one of the subsystems (M) to a redundant control mode with another of the subsystems (S), **characterized in that**
- at the beginning of the updating phase, the one subsystem (M) creates a local copy (K) of its relevant data,
- during the updating phase, the one subsystem (M) transmits the copy to the other subsystem (S) in fragmented form, and process input values (Ew3, Ew4) and releases (F13 to F16) from the one subsystem (M) are buffered, the releases indicating which processing sections (Va) of the control program (P5) have already been processed by the one subsystem (M),
- after the copy (K) has been transmitted, released processing sections (Va) of the control program (P6) of the other subsystem (S) which correspond to the processing sections (Va) of the control program (P5) of the one subsystem (M) are processed with a time lag using the other subsystem (S) taking into account the buffered process input values (Ew3, Ew4), the processing sections (Va) of the control program (P6) being processed more quickly than the processing of the processing sections (Va) of the control program (P5) in order to reduce the processing time lag to a predefined value.

2. Method according to Claim 1, **characterized in that** the process input values (Ew3, Ew4) are transmitted to the other subsystem (S) together with the releases (F13 to F19).

3. Redundant automation system having at least two subsystems (M, S) which are each provided with a control program (P5, P6), the one subsystem (M) transmitting relevant data to the other subsystem (S) within the scope of an updating phase in order to transfer the process control from a solo mode of one of the subsystems (M) to a redundant control mode with another of the subsystems (S), **characterized in that**
- the one subsystem (M) is designed to create a local copy (K) of its relevant data at the beginning of the updating phase,
- the one subsystem (M) is also designed to transmit the copy (K) to the other subsystem (S) in fragmented form during the updating phase,
- the one subsystem (M), the other subsystem (S) or a further subsystem of the automation system is designed to buffer process input values (Ew3, Ew4) and releases (F13 to F16) from the one subsystem (M), the releases indicating which processing sections (Va) of the control program (P5) have already been processed by the one subsystem (M),
- the other subsystem (S) is also designed, after the copy (K) has been received, to process released processing sections (Va) of its control program (P6) which correspond to the processing sections (Va) of the control program (P5) of the one subsystem (M) with a time lag taking into account the buffered process input values (Ew3, Ew4), the automation system being designed to process the processing sections (Va) of the control program (P6) more quickly than the processing of the processing sections (Va) of the control program (P5) in order to reduce the processing time lag to a predefined value.

4. Redundant automation system according to Claim 3, **characterized in that** the one subsystem (M) is designed to transmit the process input values (Ew3, Ew4) to the other subsystem together with the releases (F13 to F19).

## Revendications

1. Procédé pour faire fonctionner un système d'automatisation ayant au moins deux sous-systèmes ( M, S ), qui sont pourvus respectivement d'un programme ( P5, P6 ) de commande, dans lequel, pour faire passer la commande de processus d'un fonctionnement en solo de l'un des sous-systèmes ( M ) à un fonctionnement de commande redondant avec un autre des sous-systèmes ( S ), des données pertinentes de l'un des sous-systèmes ( M ) sont transmises à l'autre sous-système ( S ) dans le cadre d'une phase de mise à jour du système d'automatisation, **caractérisé en ce que**
- au début de la phase de mise à jour, une copie ( K ) locale de ces données pertinentes est créée par l'un des sous-systèmes ( M ),
- pendant la phase de mise à jour, la copie par l'un des sous-systèmes ( M ) est transmise de manière fragmentée à l'autre sous-système ( S ) et des valeurs ( Ew3, Ew4 ) d'entrée de processus, ainsi que des libérations ( F13 à F16 ) de l'un des sous-systèmes ( M ), sont mémorisées intermédiairement, les libérations indiquant les parties ( Va ) de traitement du programme ( P5 ) de commande que l'un des sous-systèmes ( M ) a déjà traitées,
- après la transmission de la copie ( K ), des parties ( Va ) de traitement libérées du programme ( P6 ) de commande de l'autre sous-système ( S ), qui correspondent aux parties ( Va ) de traitement du programme ( P5 ) de commande de l'un des sous-systèmes ( M ), sont, en tenant compte des valeurs ( Ew3, Ew4 ) d'entrée de processus mémorisées intermédiairement, traitées au moyen de l'autre sous-système ( S ) avec un retard dans le temps, dans lequel, pour diminuer le retard dans le temps du traitement jusqu'à une valeur donnée à l'avance, les parties ( Va ) de traitement du programme ( P6 ) de commande sont traitées plus rapidement que le traitement des parties ( Va ) de traitement du programme ( P5 ) de commande.

2. Procédé suivant la revendication 1, **caractérisé en ce que** les valeurs ( Ew3, Ew4 ) d'entrée de processus sont transmises ensemble avec les libérations ( F3 à F19 ) à l'autre sous-système ( S ).

3. Système d'automatisation redondant ayant au moins deux sous-systèmes ( M, S ), qui sont pourvus respectivement d'un programme ( P5, P6 ) de commande, dans lequel, pour faire passer la commande de processus d'un fonctionnement en solo de l'un des sous-systèmes ( M ) à un fonctionnement de commande redondant avec un autre des sous-systèmes ( S ), l'un des sous-systèmes ( M ) transmet à l'autre sous-système ( M ) des données pertinentes dans le cadre d'une phase de mise à jour, **caractérisé en ce que**
- l'un des sous-systèmes ( M ) est constitué pour créer, au début de la phase de mise à jour, une copie ( K ) locale de ces données pertinentes,
- l'un des sous-systèmes ( M ) est constitué, en outre, pour transmettre, pendant la phase de mise à jour, de manière fragmentée, la copie ( K ) locale à l'autre sous-système ( S ),
- l'un des sous-système ( M ), l'autre sous-système ( S ) ou un autre sous-système du système d'automatisation est constitué pour mémoriser intermédiairement des valeurs ( Ew3, Ew4 ) d'entrée de processus, ainsi que des libérations ( F13 à F16 ) de l'un des sous-systèmes ( M ), les libérations indiquant les parties ( Va ) de traitement du programme ( P5 ) de commande que l'un des sous-systèmes ( M ) a déjà traitées,
- l'autre sous-système ( S ) est constitué pour, après la réception de la copie, traiter, avec un retard dans le temps, des parties ( Va ) de traitement libérées de son programme ( P6 ) de commande, qui correspondent aux parties ( Va ) de traitement du programme ( P5 ) de commande en tenant compte des valeurs ( Ew3, Ew4 ) d'entrée de processus mémorisées intermédiairement, le système d'automatisation étant constitué pour, pour la diminution du retard dans le temps du traitement jusqu'à une valeur donnée à l'avance, traiter plus rapidement les parties ( Va ) de traitement du programme ( P6 ) de commande que le traitement des parties ( Va ) de traitement du programme ( P5 ) de commande.

4. Système d'automatisation redondant suivant la revendication 3, **caractérisé en ce que** l'un des sous-systèmes ( M ) est constitué pour transmettre à l'autre sous-système les valeurs ( Ew1, Ew2 ) d'entrée de processus ensemble avec les libérations ( F13 à F19 ) .
